# EUROPÄISCHE PATENTSCHRIFT

(11) **EP 1 203 388 B1**
(45) Veröffentlichungstag und Bekanntmachung des Hinweises auf die Patenterteilung: **01.10.2003**
(21) Anmeldenummer: 00962168.1
(22) Anmeldetag: 28.07.2000
(51) Int. Cl.: H01H 47/04

(54) **AUSSCHALTVERZÖGERUNGSSCHALTUNG FÜR EIN ELEKTROMECHANISCHES SCHALTGERÄT**
TIMED TRIPPING CIRCUIT FOR AN ELECTROMECHANICAL SWITCHING DEVICE
CIRCUIT DE TEMPORISATION D'INTERRUPTION POUR UN APPAREIL DE COMMUTATION ELECTROMECANIQUE

(30) Priorität: 03.08.1999 DE 19936406
(43) Veröffentlichungstag der Anmeldung: 08.05.2002
(73) Patentinhaber: SIEMENS AKTIENGESELLSCHAFT, 80333 München (DE)
(72) Erfinder: ZIZLER, Josef, D-92272 Freudenberg (DE)
(86) Internationale Anmeldenummer: DE0002507
(87) Internationale Veröffentlichungsnummer: WO01009910

(56) Entgegenhaltungen:
- DE-A- 3 239 840
- PATENT ABSTRACTS OF JAPAN vol. 005, no. 063 (E-054), 28. April 1981 (1981-04-28) & JP 56 012710 A (SEIKO EPSON CORP), 7. Februar 1981 (1981-02-07)

## Beschreibung

Die vorliegende Erfindung betrifft eine Ausschaltverzögerungsschaltung für ein elektromechanisches Schaltgerät, mit zwei Eingangsklemmen, über die der Ausschaltverzögerungsschaltung eine Eingangsspannung zuführbar ist, und zwei Ausgangsklemmen, über die eine Versorgungsspannung an das Schaltgerät anlegbar ist, wobei die Ausgangsklemmen über einen Energiespeicher miteinander verbunden sind, wobei mittels des Energiespeichers ein Einbruch der Eingangsspannung zumindest kurzfristig überbrückbar ist, und wobei das Schaltgerät seinen Schaltzustand ändert, wenn die Versorgungsspannung eine Haltespannung unterschreitet.

Eine derartige Ausschaltverzögerungsschaltung ist allgemein bekannt. Beispielhaft wird die DE 32 39 840 C2 genannt.

Beim Ausschalten eines elektromechanischen Schaltgeräts (Schütz oder Relais) kann es geschehen, daß das Schaltgerät beim Unterschreiten seiner Haltespannung zwar zunächst abfällt, sodann aber seine Bewegungsrichtung kurzfristig wieder umkehrt oder zumindest erheblich langsamer abfällt. Dies kann im Schaltgerät zu erhöhtem Kontaktverschleiß führen. Ferner können Auswirkungen auf eine durch das Schaltgerät geschaltete Last auftreten.

Die Aufgabe der vorliegenden Erfindung besteht darin, eine Ausschaltverzögerungsschaltung derart auszugestalten, daß beim Ändern des Schaltzustandes durch Absinken der Versorgungsspannung ein schnelles, zuverlässiges Schalten des Schaltgeräts erfolgt.

Die Aufgabe wird dadurch gelöst, daß die Ausschaltverzögerungsschaltung ein spannungsempfindliches Schaltelement aufweist, welches den Energiespeicher von den Ausgangsklemmen trennt, wenn die Versorgungsspannung eine Grenzspannung unterschreitet, wobei die Grenzspannung größer als die Haltespannung ist.

Denn dadurch wird beim Absinken der Versorgungsspannung eine Energiezufuhr zum Schaltgerät noch vor Erreichen der Haltespannung völlig unterbunden, so daß dieses schnell und unbedingt abfällt.

Wenn die Grenzspannung einstellbar ist, ist die Ausschaltverzögerungsschaltung universell bei verschiedenen elektromechanischen Schaltgeräten einsetzbar.

Vorzugsweise weist die Versorgungsspannung eine Nennspannung auf und sind die Ausgangsklemmen über ein Überspannungsschutzelement miteinander verbunden, das stromleitend wird, wenn über ihm eine Überspannung abfällt, die größer als die Nennspannung ist. Denn dadurch erfolgt einerseits ein wirksamer Überspannungsschutz für das angeschlossene Schaltgerät, andererseits wird die im Schaltgerät gespeicherte magnetische Energie schnell in Wärme überführt.

Wenn die Ausgangsklemmen mit den Eingangsklemmen verbunden sind, ist das spannungsempfindliche Schaltelement vorzugsweise derart angeordnet, daß es eine der Eingangsklemmen von einer der Ausgangsklemmen trennt. Es ist aber auch möglich, daß es derart angeordnet ist, daß es nur den Energiespeicher von den Ausgangsklemmen trennt.

Der Energiespeicher kann beispielsweise als Speicherkondensator ausgebildet sein, dem ein Ladewiderstand in Reihe geschaltet ist.

Das spannungsempfindliche Schaltelement kann beispielsweise als Relais mit in Reihe geschalteter Zenerdiode ausgebildet sein. Alternativ kann das spannungsempfindliche Schaltelement als Halbleiterschalter ausgebildet sein.

Weitere Vorteile und Einzelheiten ergeben sich aus den übrigen Ansprüchen sowie der nachfolgenden Beschreibung eines Ausführungsbeispiels. Dabei zeigen in Prinzipdarstellung
- FIG 1: eine Ausschaltverzögerungsschaltung mit einem elektromechanischen Schaltgerät,
- FIG 2: eine weitere Ausschaltverzögerungsschaltung und
- FIG 3: ebenfalls eine weitere Ausschaltverzögerungsschaltung.

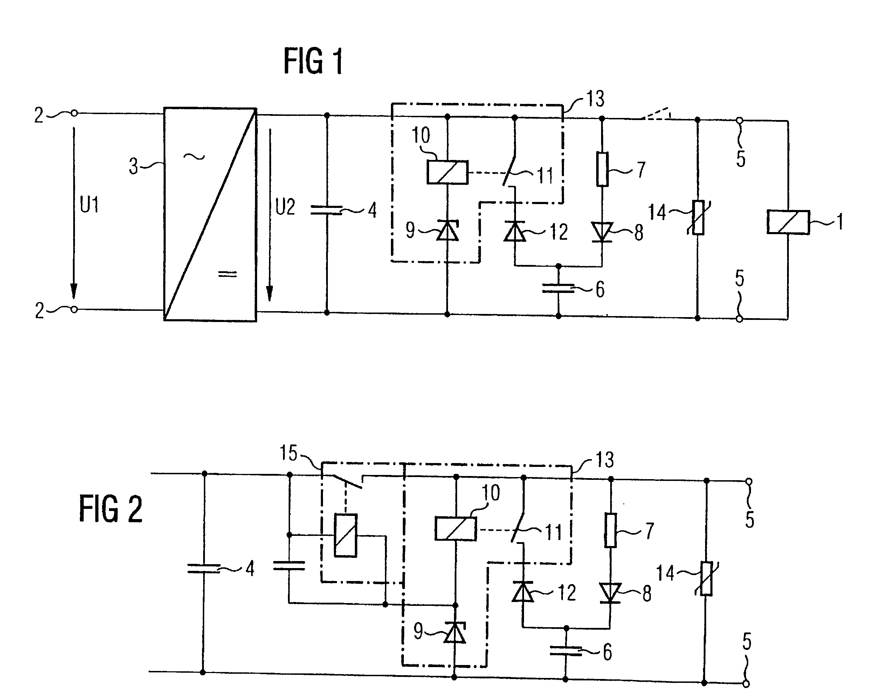

Gemäß FIG 1 ist einem elektromagnetischen Schaltgerät 1 eine Ausschaltverzögerungsschaltung vorgeschaltet. Das Schaltgerät 1 ist gemäß Ausführungsbeispiel als Schütz ausgebildet. Es könnte aber ebenso als Relais ausgebildet sein.

Die Ausschaltverzögerungsschaltung weist zwei Eingangsklemmen 2 auf, über die der Ausschaltverzögerungsschaltung eine Eingangsspannung U1 zuführbar ist. Den Eingangsklemmen 2 ist eine Gleichrichterschaltung 3 nachgeordnet, der ein Stützkondensator 4 zugeordnet ist. Der Stützkondensator 4 dient der Glättung einer Versorgungsspannung U2, die von der Gleichrichterschaltung 3 abgegeben wird. Die Versorgungsspannung U2 wird zwei Ausgangsklemmen 5 zugeführt, über welche die Versorgungsspannung U2 an das Schaltgerät 1 anlegbar ist.

Das Schaltgerät 1 ändert seinen Schaltzustand, wenn die Versorgungsspannung U2 eine Haltespannung unterschreitet. Um nun zu verhindern, daß bei kurzfristigen Einbrüchen der Eingangsspannung U1 das Schaltgerät 1 sofort abfällt, sind die Ausgangsklemmen 5 über einen Energiespeicher 6 miteinander verbunden. Mittels des Energiespeichers 6 ist ein Einbruch der Eingangsspannung U1 zumindest kurzfristig überbrückbar. Gemäß FIG 1 ist der Energiespeicher 6 als Speicherkondensator 6 ausgebildet, dem ein Ladewiderstand 7 und eine Ladediode 8 vorgeschaltet sind.

Die Ausschaltverzögerungsschaltung weist ein Relais mit einer Relaisspule 10 und einem Relaiskontakt 11 auf. Der Relaisspule 10 ist eine Zenerdiode 9 in Reihe geschaltet. Wenn an den Eingangsklemmen 2 die volle Eingangsspannung U1 anliegt, sind der Stützkondensator 4 sowie der Energiespeicher 6 voll aufgeladen. Daher fließt durch die Zenerdiode 9 Strom, so daß die Relaisspule 10 den Relaiskontakt 11 geschlossen hält. Der Speicherkondensator 6 ist daher über eine Endladediode 12 an die Ausgangsklemmen 5 angekoppelt.

Die Zenerdiode 9 weist eine Zenerspannung auf, die oberhalb der Haltespannung liegt, aber kleiner als eine Nennspannung ist, welche die Versorgungsspannung U2 normalerweise aufweist. Die Zenerdiode 9, die Relaisspule 10 und der Relaiskontakt 11 bilden daher ein spannungsempfindliches Schaltelement 13, welches den Energiespeicher 6 von den Ausgangsklemmen 5 trennt, wenn die Versorgungsspannung U2 eine Grenzspannung unterschreitet, welche geringfügig größer als die Zenerspannung der Zenerdiode 9 ist. Die Grenzspannung ist daher größer als die Haltespannung, aber kleiner als die Nennspannung.

Wenn nun die Eingangsspannung U1 einbricht oder abgeschaltet wird, wird das Schaltgerät 1 kurzfristig über den Speicherkondensator 6 und die Endladediode 12 noch mit Strom versorgt. Dabei sinkt die Versorgungsspannung U2 ab. Wenn nun die Versorgungsspannung U2 die Grenzspannung erreicht, fällt der Relaiskontakt 11 ab und der Speicherkondensator 6 wird von den Ausgangsklemmen 5 getrennt. Damit entfällt schlagartig jede weitere Energiezufuhr zum Schaltgerät 1. Dieses fällt daher rasch ab.

Das elektromagnetische Schaltgerät 1 erzeugt beim abrupten Unterbrechen des Stromkreises eine hohe Induktionsspannung, welche erheblich größer sein kann als die Nennspannung. Daher sind die Ausgangsklemmen 5 über ein Überspannungsschutzelement 14 miteinander verbunden. Das Überspannungsschutzelement 14 kann beispielsweise als Varistor 14 ausgebildet sein. Alternativ wäre eine Ausbildung als Paar von antiparallel in Reihe geschalteten Zenerdioden in Verbindung mit einem Strombegrenzungswiderstand möglich. Das Überspannungsschutzelement 14 wird stromleitend, wenn über ihm eine Überspannung abfällt, die größer als die Nennspannung ist. Dadurch wird das Schaltgerät 1 vor Schäden geschützt.

Gemäß FIG 1 sind die Ausgangsklemmen 5 (indirekt über die Gleichrichterschaltung 3) mit den Eingangsklemmen 2 verbunden. Das spannungsempfindliche Schaltelement 13 ist derart angeordnet, daß es nur den Speicherkondensator 6 von den Ausgangsklemmen 5 trennt. Der Relaiskontakt 11 könnte aber auch derart angeordnet sein, daß zusätzlich eine der Ausgangsklemmen 5 von einer der Eingangsklemmen 2 getrennt wird. Dies ist in FIG 1 durch die gestrichelte Alternativposition des Relaiskontakts 11 angedeutet.

Die Ausschaltverzögerungsschaltung gemäß FIG 2 entspricht im wesentlichen der Ausschaltverzögerungsschaltung von FIG 1. Hier ist dem spannungsempfindlichen Schaltelement 13 aber ein weiteres spannungsempfindliches Schaltelement 15 vorgeschaltet. Im übrigen ist die Ausschaltverzögerungsschaltung gemäß FIG 2 ebenso ausgebildet wie die gemäß FIG 1.

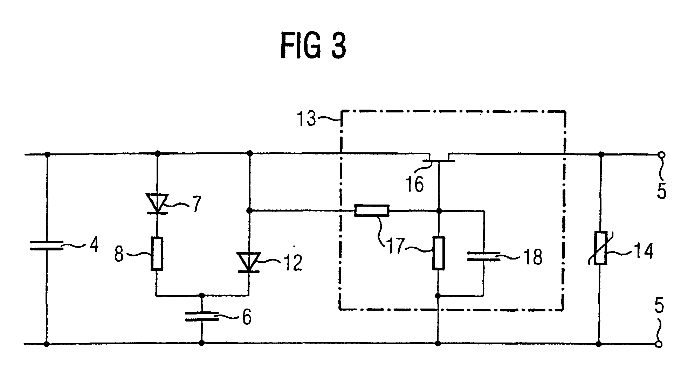

Bei der Ausschaltverzögerungsschaltung gemäß FIG 3 ist das spannungsempfindliche Schaltelement 13 als Halbleiterschalter 16 ausgebildet, dem Beschaltungswiderstände 17 und ein Beschaltungskondensator 18 zugeordnet sind. Insbesondere bei dieser Ausführungsform ist eine einfache Einstellbarkeit der Grenzspannung dadurch gegeben, daß einer der Beschaltungswiderstände 17 oder beide Beschaltungswiderstände 17 veränderlich ausgebildet sind. Aber auch bei den Ausführungsbeispielen gemäß FIG 1 und 2 ist eine einfache Einstellbarkeit der Grenzspannung durch eine geeignete Vorbeschaltung des spannungsempfindlichen Schaltelements 13 erreichbar.

Mit der erfindungsgemäßen Ausschaltverzögerungsspannung ergibt sich einerseits bei Spannungseinbrüchen weiterhin ein verzögertes Ausschaltung des Schaltgeräts 1, andererseits aber bei Überschreiben der Grenzspannung ein schnelles, zuverlässiges, umkehr- und verzögerungsfreies Schalten des Schaltgeräts 1.

## Patentansprüche

1. Ausschaltverzögerungsschaltung für ein elektromechanisches Schaltgerät (1), mit zwei Eingangsklemmen (2), über die der Ausschaltverzögerungsschaltung eine Eingangsspannung (U1) zuführbar ist, und zwei Ausgangsklemmen (5), über die eine Versorgungsspannung (U2) an das Schaltgerät (1) anlegbar ist, wobei die Ausgangsklemmen (5) über einen Energiespeicher (6) miteinander verbunden sind, wobei mittels des Energiespeichers (6) ein Einbruch der Eingangsspannung (U1) zumindest kurzfristig überbrückbar ist, und wobei das Schaltgerät (1) seinen Schaltzustand ändert, wenn die Versorgungsspannung (U2) eine Haltespannung unterschreitet,
**dadurch gekennzeichnet,**
**daß** die Ausschaltverzögerungsschaltung ein spannungsempfindliches Schaltelement (13) aufweist, welches den Energiespeicher (6) von den Ausgangsklemmen (5) trennt, wenn die Versorgungsspannung (U2) eine Grenzspannung unterschreitet, wobei die Grenzspannung größer als die Haltespannung ist.

2. Ausschaltverzögerungsschaltung nach Anspruch 1,
**dadurch gekennzeichnet,**
**daß** die Grenzspannung einstellbar ist.

3. Ausschaltverzögerungsschaltung nach Anspruch 1 oder 2,
**dadurch gekennzeichnet,**
**daß** die Versorgungsspannung (U2) eine Nennspannung aufweist und daß die Ausgangsklemmen (5) über ein Überspannungsschutzelement (14) miteinander verbunden sind, das stromleitend wird, wenn über ihm eine Überspannung abfällt, die größer als die Nennspannung ist.

4. Ausschaltverzögerungsschaltung nach Anspruch 1, 2 oder 3,
**dadurch gekennzeichnet,**
**daß** die Ausgangsklemmen (5) mit den Eingangsklemmen (2) verbunden sind und daß das spannungsempfindliche Schaltelement (13) derart angeordnet ist, daß es eine der Eingangsklemmen (2) von einer der Ausgangsklemmen (5) trennt.

5. Ausschaltverzögerungsschaltung nach Anspruch 1, 2 oder 3,
**dadurch gekennzeichnet,**
**daß** die Ausgangsklemmen (5) mit den Eingangsklemmen (2) verbunden sind und daß das spannungsempfindliche Schaltelement (13) derart angeordnet ist, daß es nur den Energiespeicher (6) von den Ausgangsklemmen (5) trennt.

6. Ausschaltverzögerungsschaltung nach einem der obigen Ansprüche,
**dadurch gekennzeichnet,**
**daß** der Energiespeicher (6) als Speicherkondensator (6) ausgebildet ist, dem ein Ladewiderstand (7) in Reihe geschaltet ist.

7. Ausschaltverzögerungsschaltung nach einem der obigen Ansprüche,
**dadurch gekennzeichnet,**
**daß** dem spannungsempfindlichen Schaltelement (13) ein weiteres spannungsempfindliches Schaltelement (15) vorgeschaltet ist.

8. Ausschaltverzögerungsschaltung nach einem der Ansprüche 1 bis 7,
**dadurch gekennzeichnet,**
**daß** das spannungsempfindliche Schaltelement (13) als Relais (10, 11) mit in Reihe geschalteter Zenerdiode (9) ausgebildet ist.

9. Ausschaltverzögerungsschaltung nach einem der Ansprüche 1 bis 7,
**dadurch gekennzeichnet,**
**daß** das spannungsempfindliche Schaltelement (13) als Halbleiterschalter (16) ausgebildet ist.

10. Ausschaltverzögerungsschaltung nach einem der obigen Ansprüche,
**dadurch gekennzeichnet,**
**daß** den Eingangsklemmen (2) eine Gleichrichterschaltung (3) nachgeordnet ist.

## Claims

1. Tripping delay circuit for an electromechanical switching device (1), with two input terminals (2) via which an input voltage (U1) can be supplied to the tripping delay circuit, and two output terminals (5), via which a supply voltage (U2) can be applied to the switching device (1), the output terminals (5) being connected to one another via an energy storage mechanism (6), it being possible to bridge an interruption in the input voltage (U1) at least for a short period by means of the energy storage mechanism (6), and the switching device (1) changing its circuit state when the supply voltage (U2) falls below a sustaining voltage, **characterised in that** the tripping delay circuit has a voltage-sensitive switching device (13) which isolates the energy storage mechanism (6) from the output terminals (5) when the supply voltage (U2) falls below a limiting voltage, the limiting voltage being greater than the sustaining voltage.

2. Tripping delay circuit according to Claim 1, **characterised in that** the limiting voltage is adjustable.

3. Tripping delay circuit according to Claim 1 or 2, **characterised in that** the supply voltage (U2) has a nominal voltage, and that the output terminals (5) are connected to one another via an overvoltage protection device (14), which becomes conductive when an overvoltage exceeding the nominal voltage drops over it.

4. Tripping delay circuit according to Claim 1, 2 or 3, **characterised in that** the output terminals (5) are connected to the input terminals (2) and that the voltage-sensitive switching device (13) is arranged in such a way that it isolates one of the input terminals (2) from one of the output terminals (5).

5. Tripping delay circuit according to Claim 1, 2 or 3, **characterised in that** the output terminals (5) are connected to the input terminals (2) and that the voltage-sensitive switching device (13) is arranged in such a way that it isolates only the energy storage mechanism (6) from the output terminals (5).

6. Tripping delay circuit according to one of the above claims, **characterised in that** the energy storage mechanism (6) is designed as a storage capacitor (6), to which a charging resistor (7) is connected in series.

7. Tripping delay circuit according to one of the above claims, **characterised in that** the voltage-sensitive switching device (13) is series-connected to another voltage-sensitive switching device (15).

8. Tripping delay circuit according to one of Claims 1 to 7, **characterised in that** the voltage-sensitive switching device (13) is designed as a relay (10, 11) with a series-connected Zener diode (9).

9. Tripping delay circuit according to one of Claims 1 to 7, **characterised in that** the voltage-sensitive switching device (13) is designed as a semiconductor switch (16).

10. Tripping delay circuit according to one of the above claims, **characterised in that** a rectifier circuit (3) is positioned downstream from the input terminals (2).

## Revendications

1. Circuit de temporisation de coupure pour un appareil de commutation électromécanique (1), lequel circuit comporte deux bornes d'entrée (2) par l'intermédiaire desquelles une tension d'entrée (U1) peut être envoyée au circuit de temporisation de coupure et deux bornes de sortie (5) par l'intermédiaire desquelles une tension d'alimentation (U2) peut être appliquée à l'appareil de commutation (1), les bornes de sortie (5) étant reliées par l'intermédiaire d'un accumulateur d'énergie (6), une chute de la tension d'entrée (U1) pouvant être pontée au moins brièvement au moyen de l'accumulateur d'énergie (6) et l'appareil de commutation (1) modifiant son état de commutation lorsque la tension d'alimentation (U2) devient inférieure à une tension de maintien,
**caractérisé par le fait que** le circuit de temporisation de coupure comporte un élément commutateur (13) qui est sensible à la tension et qui sépare l'accumulateur d'énergie (6) des bornes de sortie (5) lorsque la tension d'alimentation (U2) devient inférieure à une tension limite, la tension limite étant supérieure à la tension de maintien.

2. Circuit de temporisation de coupure selon la revendication 1, **caractérisé par le fait que** la tension limite est réglable.

3. Circuit de temporisation de coupure selon la revendication 1 ou 2, **caractérisé par le fait que** la tension d'alimentation (U2) a une tension nominale et que les bornes de sortie (5) sont reliées par l'intermédiaire d'un élément protecteur en cas de surtension (14) qui est conducteur de courant lorsqu'il passe par lui une surtension qui est supérieure à la tension nominale.

4. Circuit de temporisation de coupure selon la revendication 1, 2 ou 3, **caractérisé par le fait que** les bornes de sortie (5) sont reliées aux bornes d'entrée (2) et que l'élément commutateur (13) sensible à la tension est disposé de telle sorte qu'il sépare l'une des bornes d'entrée (2) de l'une des bornes de sortie (5).

5. Circuit de temporisation de coupure selon la revendication 1, 2 ou 3, **caractérisé par le fait que** les bornes de sortie (5) sont reliées aux bornes d'entrée (2) et que l'élément commutateur (13) sensible à la tension est disposé de telle sorte qu'il sépare seulement l'accumulateur d'énergie (6) des bornes de sortie (5).

6. Circuit de temporisation de coupure selon l'une des revendications précédentes, **caractérisé par le fait que** l'accumulateur d'énergie (6) est conçu comme un condensateur de stockage (6) par rapport auquel une résistance de charge (7) est branchée en série.

7. Circuit de temporisation de coupure selon l'une des revendications précédentes, **caractérisé par le fait qu'**un autre élément commutateur (15) sensible à la tension est branché du côté amont de l'élément commutateur (13) sensible à la tension.

8. Circuit de temporisation de coupure selon l'une des revendications 1 à 7, **caractérisé par le fait que** l'élément commutateur (13) sensible à la tension est conçu comme un relais (10, 11) avec une diode Zener (9) branchée en série.

9. Circuit de temporisation de coupure selon l'une des revendications 1 à 7, **caractérisé par le fait que** l'élément commutateur (13) sensible à la tension est conçu comme un interrupteur à semi-conducteur (16).

10. Circuit de temporisation de coupure selon l'une des revendications précédentes, **caractérisé par le fait qu'**un circuit redresseur (3) est branché du côté aval des bornes d'entrée (2).
